Europäisches Patentamt

European Patent Office

Office européen des brevets

(11) Veröffentlichungsnummer: **0 006 558**
A1

(12) **EUROPÄISCHE PATENTANMELDUNG**

(21) Anmeldenummer: **79101985.4**

(22) Anmeldetag: **18.06.79**

(51) Int. Cl.³: **C 08 L  23/00,** C 08 L  9/00,
C 08 J  9/00, C 08 K  3/00

(30) Priorität: **30.06.78  IT 2520478**

(43) Veröffentlichungstag der Anmeldung: **09.01.80**
**Patentblatt 80/1**

(84) Benannte Vertragsstaaten: **BE DE FR GB IT SE**

(71) Anmelder: **BAYER ITALIA S.p.A., Viale Certosa 126,
I-20156 Mailand (IT)**

(72) Erfinder: **Ambrosini, Massimo, Via Goldoni 19, I-24036
Mozzo (Bg) (IT)**
Erfinder: **Bechlenberg, Karl Theo, Via delle Primule 6,
I-2430 Brembate Sopra (Bg) (IT)**
Erfinder: **Pellicelli, Bruno, Via Parini 1, I-24030
Mapello (Bg) (IT)**

(74) Vertreter: **Gremm, Joachim, Dr. et al, Bayer AG c/o
Zentralbereich Patente, Marken und Lizenzen
Bayerwerk, D-5090 Leverkusen (DE)**

(54) Flammfeste, vernetzte Polyolefinschäume und ihre Herstellung.

(57) Vernetzte, flammfeste Polyolefinschäume enthaltend
2-25 Gew.-% eines halogenierten Polybutadiens.

EP 0 006 558 A1

ACTORUM AG

Bayer Italia                    Mailand


**Flammfeste, vernetzte Polyolefinschäume und ihre Herstellung**

Die vorliegende Erfindung betrifft vernetzte Polyolefinschäume, die durch Zugabe eines halogenierten Polybutadiens eine verbesserte Flexibilität, bessere Flammfestigkeit und bessere Griffigkeit aufweisen.


Peroxidisch vernetzte Polyolefinschäume insbesondere
Polyethylenschäume werden z. Zt. eingesetzt in den verschiedensten techn. Sektoren, wie z. B. der Rohrisolation, der Gebäudeisolation, in der Schuhindustrie,
für die Kaschierung mit Geweben, in der Herstellung
von Schwimmwesten.

Diese Polyethylenschäume haben aber aufgrund unzureichender Flexibilität und Brennbarkeit auf manchen
Gebieten nur eine begrenzte Einsetzbarkeit. Es ist
bekannt, daß man die Flexibilität durch Beigabe von
Ethylen-Vinyl-Acetat (EVA) Copolymer verbessern kann,
trotzdem sind die Ergebnisse nicht ganz zufriedenstellend.

Die Verbesserung der Flammfestigkeit kann durch Zugabe
von Produkten erreicht werden, die aufgrund der Flammtemperatur Halogene freisetzen. Trotzdem ist die Anwendung solcher Additive nicht ratsam, da sie toxische
Gase in der Herstellphase der Schäume entwickeln.


Le A 19 676

Es ist deshalb eine Aufgabe der vorliegenden Erfindung, peroxidisch vernetzten Polyethylenschaum herzustellen, die eine verbesserte Flexibilität, geringere Brennbarkeit und bessere Griffigkeit aufweisen. Ein weiterer Gegenstand der vorliegenden Erfindung ist ein Verfahren zur Herstellung der genannten Schäume mit verbesserter Treibgasausbeute.

Gegenstand der Erfindung sind daher flammfeste vernetzte Schäume aus Polyolefin(co)polymerisaten,enthaltend 2-25 Gew.-%, bezogen auf den Schaum, eines halogenierten Polybutadiens.

Unter dem Ausdruck "Polyolefine", wie er hier verwendet wird, sind Hochdruck-, Mitteldruck- oder Niederdruckpolyethylen, Mischpolymere, die im wesentlichen aus Ethylen bestehen, sowie Gemische daraus zu verstehen. Solche Mischpolymere sind z.B.: Ethylen/Propylen-Mischpolymere, Ethylen/Buten-Mischpolymere, Mischpolymere aus Ethylen und Vinylacetat und Derivaten desselben, Mischpolymere aus Ethylen und Acrylsäureester und Derivate derselben, Mischpolymere aus Ethylen und Methacrylsäure und Derivaten derselben. Besonders bevorzugt wird Polyethylen niederer Dichte, Mischungen aus Polyethylen niederer Dichte und hoher Dichte oder Mischungen aus Polyethylen niederer Dichte und Ethylen/ Vinylacetat Copolymerisat eingesetzt, wobei das Copolymerisat vorzugsweise einen Vinylacetatgehalt von 1 bis 15 Gew.-%, besonders bevorzugt unter 10 Gew.-% aufweist.

Le A 19 676

- 3 -

Die Schäume werden vorzugsweise peroxidisch vernetzt, wobei als organische Peroxide beispielsweise Dicumylperoxyd, 2,5-Dimethyl-2,5-di(tert.-butylperoxy)-hexan, 2,5-Dimethyl-2,5-di(tert.-butylperoxy)-hexin, Di-tert.-butyl-pertetraphthalat oder tert.-Butyl-hydroperoxyd verwendet werden können. Dicumylperoxid ist bevorzugt. Die Art und die Menge des der Polyolefinzusammensetzung zugesetzten organischen Peroxyds richten sich nach der Art und der Menge des verwendeten Polyolefins. In der Regel werden 0,5-1,5 Gew.-% Peroxid verwendet.

Das zur Schaumerzeugung verwendete Schäummittel sollte eine Zersetzungstemperatur haben, die gleich hoch oder höher liegt als diejenige des organischen Peroxyds. Beispiele für solche üblicherweise eingesetzten Schäummittel sind p,p'-Oxy-bis-benzolsulfonylhydrazid, Azodicarbonamid oder Di-nitrosopentamethylentetramin. Azodicarbonamid wird bevorzugt eingesetzt. Die Menge des Treibmittels sollte im Bereich von 2 bis 25 Gew.-% liegen, je nachdem welche Dichte der Schaum aufweisen soll.

Als halogeniertes Polybutadien wird bevorzugt chloriertes, insbesondere 2-Chlor-Polybutadien eingesetzt.

Durch die Zugabe von halogeniertem Polybutadien wird das typische Brandverhalten von z.B. Polyethylenschaum d.h. leichtes Entzünden und Abtropfen des geschmolzenen Materials behoben, so daß eine kleine Zugabe des

Le A 19 676

- 4 -

Additivs ausreicht, um den Schaum als 'non burning' nach
der Norm ASTM 1692 einstufen zu können.

Schließlich kann man durch die Zugabe des halogenierten
Polybutadiens die Ausbeute des Treibgases erhöhen. Das
bedeutet, daß als Folge dieser Zugabe die Menge des
Azodicarbonamids zum Erreichen eines bestimmten Gewicht/
Volumenverhältnisses fühlbar herabgesetzt werden kann.

Die erfindungsgemäßen Schäume werden nach bekannten Verfahren der Schaumerzeugung hergestellt. Besonders bevorzugt werden die Schäume kontinuierlich hergestellt, wobei
aus dem Polyolefin, dem Peroxid, Treibmittel und halogeniertem Polybutadien ohne Zersetzung des Peroxids und
des Treibmittels eine fortlaufende Platte oder ein Band
geformt wird, vorzugsweise in einem Extruder bei Temperaturen von 110 bis 140°C, und dieses fortlaufende Band
in bekannter Weise in einem Ofen durch gleichzeitiges
Erhitzen von oben und unten vernetzt und verschäumt wird.
Im Erhitzungsofen beträgt die Temperatur 180 bis 300°C,
vorzugsweise 200-230°c.

Den Schäumen können nach die üblichen Additive und auch
noch zusätzlich Flammschutzmittel wie perhalogenierte
Diphenyle wie $C_{12}HBr_9$ oder Decabrom diphenyloxid zugesetzt werden, deren Aktivität durch die Zugabe von
Antimonoxid synergistisch gesteigert werden kann.

Le A 19 676

- 5 -

<u>Beispiel 1</u>

Auf 72 Teile einer Mischung aus Polyethylen niedriger
Dichte und EVA-Copolymerisat (mit einem Vinylacetatgehalt unter 10 %) gibt man 10 Gew.-Teile Poly-2-Chlorbuta-
dien und 15 Gew.-Teile Dicumylperoxid. Diese Mischung
wird homogenisiert und zu einer kontinuierlichen Platte
verformt und in einem Ofen nach bekannter Weise vernetzt
und verschäumt.
<u>Vergleich</u>

72 Gew.-Teile einer Mischung aus Polyethylen niedriger
Dichte mit EVA-Copolymerisat (mit einem Gehalt an Vinylacetat unter 10 %) fügt man 15 Gew.-Teile Azodicarbonamid, 12 Gew.-Teile eines flammhemmenden Produktes aus
Basis eines Bromaromaten (mit einem Bromgehalt von 60 %)
und 4 Gew.-Teile von Antimontrioxid, sowie 1 Gew.-Teil
Dicumylperoxid zu. Wie in Beispiel 1 beschrieben wird die
Mischung zu einem fortlaufenden Band verformt, versetzt
und verschäumt.

Während die Mischung gemäß Beispiel 1 leicht auch in
kontinuierlichen Produktionsanlagen verarbeitbar ist,
ergibt die Mischung gemäß Vergleich erhebliche Verarbeitungsschwierigkeiten dergestalt, daß es nicht möglich ist, die Mischung in kontinuierlichen Produktionsanlagen einzusetzen.

Beide hergestellten Schäume zeigen gleiches Verhalten
hinsichtlich des Brandverhaltens nach ASTM D 1692 und
werden eingeordnet unter 'non burning'.

<u>Le A 19 676</u>

- 6 -

Beispiel 2

78 Gew.-Teile einer Mischung aus Polyethylen niedriger Dichte mit EVA Copolymerist (mit einem Vinylacetatgehalt unter 10 %) fügt man 15 Gew.-Teile Poly-2-Chlorbutadien, 16 Gew.-Teile Azodicarbonamid und 1 Gew.-Teil Dicumylperoxid zu. Nachdem die Mischung auf einem Extruder zu einem fortlaufenden Band verformt und im Ofen vernetzt und verschäumt wurde, erhält man einen Schaum mit einem Raumgewicht von 26 kg/m³. Das Volumen der Masse hat sich um das 39fache vergrößert.

Vergleich

Einer Mischung von 83 Gew.-Teilen Polyethylen niedriger Dichte mit EVA Copolymerisat (mit einem Vinylacetatgehalt unter 10 %) fügt man 16 Gew.-Teile Azodicarbonamid und 1 Gew.-Teil Dicumylperoxid zu. Man erhält nach einer Verarbeitung gemäß Beispiel 2 einen Schaum von 30 kg/m³.

Le A 19 676

- 7 -

Patentansprüche

1. Vernetzte, flammfeste Schäume aus Polyelefinen
   enthaltend 2-25 Gew.-%, bezogen auf den Schaum,
   eines halogenierten Polybutadiens.

2. Schäume gemäß Anspruch 1, die peroxidisch vernetzt
   sind.

3. Schäume gemäß Ansprüchen 1 und 2, die als Polyolefine
   Polyethylene niederer Dichte, Mischungen aus Polyethylene niederer Dichte und hohen Dichte oder
   Mischung aus Polyethylene niederer Dichte und einem
   Ethylen/Vinylacetat Copolymerisat enthalten.

4. Schäume gemäß Ansprüchen 1 - 3, enthaltend Poly-2-
   chlor-butadien als halogeniertes Polybutadien.

5. Schäume gemäß Ansprüche 1-4, enthaltend zu mindest
   ein weiteres flammhemmendes Additiv.

6. Schäume gemäß Ansprüche 1-5, enthaltend halogenierte
   Diphenyle und gegebenenfalls Antimontrioxid als
   weitere flammhemmende Additive.

7. Verfahren zur Herstellung von flammfesten, vernetzten Schäumen aus Polyolefinen nach bekannten
   Verfahren, dadurch gekennzeichnet, daß man den zu
   verschäumenden und vernetzenden Polyolefin 2-25 Gew.-%
   eines halogenierten Polybutadiens zusetzt.

Le A 19 676

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - B - 1 669 999 (THE DOW CHEMICAL CO.)<br><br>+ Ansprüche; Spalte 2, Zeilen 11 - 12 +<br><br>-- | 1 - 7 |
| X | DE - A - 1 669 998 (THE DOW CHEMICAL CO.)<br><br>+ Ansprüche; Seite 5, 3. Zeile von unten +<br><br>-- | 1 - 7 |
| X | US - A - 3 668 155 (RALEY)<br><br>+ Ansprüche; Spalte 2, Zeile 40 +<br><br>-- | 1 - 7 |
| X | US - A - 3 639 304 (RALEY)<br><br>+ Ansprüche; Spalte 2, Zeilen 47 - 48 +<br><br>-- | 1 - 7 |
| | DE - A - 2 364 993 (JAPAN SYNTHETIC RUPPER)<br><br>+ Anspruch 1 +<br><br>-- | 1 |
| | DE - A - 2 238 366 (BASF AG)<br><br>+ Ansprüche; Seite2, Zeile 27+<br><br>---- | 1 |

**KLASSIFIKATION DER ANMELDUNG (Int.Cl.²)**

C 08 L 23/00
C 08 L 9/00
C 08 J 9/00
C 08 K 3/00

**RECHERCHIERTE SACHGEBIETE (Int. Cl.²)**

C 08 L 23/00
C 08 L 9/00
C 08 J 9/00
C 08 K 3/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 06-09-1979 | WEIGERSTROFER |

EPA form 1503.1   06.78